# EUROPÄISCHE PATENTSCHRIFT

(11) **EP 3 500 490 B1**
(45) Veröffentlichungstag und Bekanntmachung des Hinweises auf die Patenterteilung: **05.05.2021**
(21) Anmeldenummer: 17754138.0
(22) Anmeldetag: 11.08.2017
(51) Int. Cl.: B64D 11/06

(54) **FLUGZEUGSITZVORRICHTUNG**
AIRCRAFT SEAT
SIÈGE D'AVION

(30) Priorität: 18.08.2016 DE 102016115359
(43) Veröffentlichungstag der Anmeldung: 26.06.2019
(73) Patentinhaber: Recaro Aircraft Seating GmbH & Co. KG, 74523 Schwäbisch Hall (DE)
(72) Erfinder: CALLE, Javier Parrilla, 70188 Stuttgart (DE)
(74) Vertreter: Daub, Thomas
(86) Internationale Anmeldenummer: PCT/EP2017/070405
(87) Internationale Veröffentlichungsnummer: WO 2018/033479

(56) Entgegenhaltungen:
- EP-A1- 2 325 040
- WO-A1-98/09554
- WO-A2-2006/110452
- DE-A1-102012 208 725
- DE-B- 1 169 625
- US-A- 2 722 267
- US-A- 5 316 371
- US-A1- 2012 007 399

## Beschreibung

### Stand der Technik

Die Erfindung betrifft eine Flugzeugsitzvorrichtung nach dem Oberbegriff des Patentanspruchs 1.

Es ist bereits eine Flugzeugsitzvorrichtung mit einem Abstützmodul, das als eine Kopfstütze, eine Lordosenstütze oder ein Sitzboden ausgebildet ist und das zumindest ein elastisch verformbares Abstützelement umfasst, vorgeschlagen worden.

Das Dokument WO-A1-9809554 zeigt die Ausbildung einer Kopfstütze aus dem Stand der Technik.

Die Aufgabe der Erfindung besteht insbesondere darin, eine gattungsgemäße Vorrichtung mit verbesserten Eigenschaften hinsichtlich eines Komforts bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Flugzeugsitzvorrichtung mit einem Abstützmodul, das als eine Kopfstütze ausgebildet ist und das zumindest ein elastisch verformbares Abstützelement umfasst.

Es wird vorgeschlagen, dass das elastisch verformbare Abstützelement dazu vorgesehen ist, eine biegewellenartige Ausgleichsbewegung bei einem Einwirken einer Benutzungskraft auszuführen. Unter einer "Flugzeugsitzvorrichtung" soll dabei insbesondere eine Vorrichtung verstanden werden, die zumindest einen Teil eines Flugzeugsitzes oder einen gesamten Flugzeugsitz ausbildet. Unter einem "Flugzeugsitz" soll dabei insbesondere ein Sitz verstanden werden, der dazu vorgesehen ist, in einer Flugzeugkabine eines Flugzeugs auf einem Kabinenboden aufgeständert zu werden, und auf dem ein Passagier während eines Flugs sitzen kann. Dabei weist der Flugzeugsitz zumindest einen Sitzboden und eine mit dem Sitzboden gekoppelte Rückenlehne auf, wobei die Rückenlehne vorzugsweise verschwenkbar mit dem Sitzboden verbunden ist, wodurch der Flugzeugsitz vorzugsweise in unterschiedliche Funktionsstellungen bewegbar ist. Dabei ist unter "gekoppelt" zu verstehen, dass der Sitzboden direkt oder indirekt mit der Rückenlehne verbunden sein kann. Beispielsweise ist der Sitzboden und die Rückenlehne über einen Sitzteiler, ein Sitzgestell und/oder eine Kinematik miteinander gekoppelt. Dabei ist es sowohl bei der direkten als auch bei der indirekten Verbindung zwischen dem Sitzboden und der Rückenlehne denkbar, dass der Sitzboden und die Rückenlehne verschwenkbar oder starr und unbeweglich miteinander gekoppelt sind. Unter einem "Abstützmodul" soll dabei insbesondere ein Modul der Flugzeugsitzvorrichtung verstanden werden, an dem ein auf dem Flugzeugsitz sitzender Passagier zumindest einen Teil seines Körpers abstützen und dadurch eine Kraft auf das Abstützmodul ausüben kann. Unter einer "Kopfstütze" soll dabei insbesondere eine Einheit mit zumindest einem Kopfstützelement und zumindest einer Nackenstützeinheit und/oder Schulterstützeinheit verstanden werden. Insbesondere weist die Kopfstützeinheit zumindest eine Gesamtlängserstreckung auf, die zumindest im Wesentlichen parallel zu der Vertikalrichtung ausgerichtet ist. Unter einem "Kopfstützelement" soll insbesondere ein Element verstanden werden, das in zumindest einem Gebrauchszustand zumindest eine Anlagefläche zumindest zu einer Abstützung eines Hinterkopfs eines Passagiers aufweist. Insbesondere spannt das Kopfstützelement, insbesondere eine Oberfläche des Kopfstützelements, vorteilhaft die Anlagefläche, zumindest eine Vertikalebene auf. Insbesondere weist das Kopfstützelement zumindest eine Kopfstützelementlängserstreckung auf, die zumindest im Wesentlichen parallel zu der Vertikalrichtung ausgerichtet ist. Unter einer "Lordosenstütze" soll insbesondere ein Bauteil verstanden werden, das zur Stützung des menschlichen Körpers im unteren Wirbelsäulenbereich, insbesondere ausschließlich in diesem Bereich, vorgesehen ist. Hierfür ist die Lordosenstütze vorzugsweise im untersten Bereich der Rückenlehne angeordnet, wobei - bezogen auf die Erstreckung der Rückenlehne in deren Längsrichtung - sich die Lordosenstütze vorteilhaft über zumindest 25%, jedoch um maximal 40% der Längserstreckung der Rückenlehne erstreckt. Unter einem "Sitzboden" soll dabei insbesondere ein Teil des Flugzeugsitzes verstanden werden, auf dem eine Person mit ihrem Gesäß Platz nehmen kann, wobei der Sitzboden dabei im Wesentlichen parallel zu der Aufständerebene, auf der der Flugzeugsitz aufgeständert ist, ausgerichtet ist. Unter "elastisch verformbar" soll dabei insbesondere wiederholt verformbar verstanden werden, wobei ein Element durch eine elastische Verformung nicht mechanisch beschädigt oder zerstört wird und insbesondere nach einer Verformung selbstständig wieder einer Grundform zustrebt. Unter einem "Abstützelement" soll dabei insbesondere ein Element des Abstützmoduls verstanden werden, das zumindest einen Teil des Abstützmoduls ausbildet und dazu zumindest teilweise elastisch verformbar ist. Unter einer "biegewellenartigen Ausgleichsbewegung" soll dabei insbesondere eine Bewegung verstanden werden, die als ein Ausgleich auf eine andere Bewegung, wie insbesondere die Bewegung des Abstützelements, aufgrund einer einwirkenden Benutzungskraft, die insbesondere biegewellenartig ausgebildet ist, erfolgt. Unter einer "Benutzungskraft" soll dabei insbesondere eine auf den Flugzeugsitz wirkende Gewichtskraft verstanden werden, die bei einer Benutzung entsteht, insbesondere durch einen auf dem Flugzeugsitz sitzenden Passagier. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Durch eine erfindungsgemäße Ausgestaltung kann vorteilhaft eine Flugzeugsitzvorrichtung bereitgestellt werden, die sich vorteilhaft zumindest teilweise an eine Größe und/oder ein Gewicht und/oder eine Figur eines Passagiers anpasst. Dadurch kann insbesondere vorteilhaft ein Komfort des Flugzeugsitzes erhöht werden.

Weiter wird vorgeschlagen, dass das elastisch verformbare Abstützelement als eine Biegewellenmembran ausgebildet ist. Unter einer "Biegewellenmembran" soll dabei insbesondere ein dünnes Element verstanden werden, welches zumindest in einer Erstreckungsrichtung und zumindest in einem Belastungszustand eine Wellenform aufweist, wobei sich die Wellenform bei einem Einwirken einer Kraft auf die Biegewellenmembran verändert und sich so beispielsweise an eine Körperform anpasst. Dadurch kann das Abstützelement besonders vorteilhaft ausgebildet werden.

Ferner wird vorgeschlagen, dass das elastisch verformbare Abstützelement an seinem oberen Ende und an seinem unteren Ende mit einer Rückenlehne verbunden ist. Unter einem "oberen Ende" soll dabei insbesondere ein Ende des Abstützelements verstanden werden, das in einem montierten Zustand einen größten Abstand zu der Aufständerebene aufweist. Das obere Ende des Abstützelements ist dabei vorzugsweise in einem oberen Bereich der Kopfstütze angeordnet. Unter einem "unteren Ende" soll dabei insbesondere ein Ende des Abstützelements verstanden werden, das in einem montierten Zustand einen minimalen Abstand zu der Aufständerebene aufweist. Das untere Ende des Abstützelements ist dabei in dem montierten Zustand vorzugsweise der Aufständerebene zugewandt. Unter einer "Rückenlehne" soll dabei insbesondere ein Element des Flugzeugsitzes verstanden werden, das sich, von einem Sitzboden des Flugzeugsitzes aus, von der Aufständerebene wegerstreckt und an einem hinteren Ende des Sitzbodens angeordnet ist, sodass sich im montierten Zustand eine auf dem Flugzeugsitz sitzende Person mit dem Rücken an der Rückenlehne abstützen kann. Das Abstützelement ist an seinem unteren Ende und/oder an seinem oberen Ende über ein Loslager oder ein Festlager mit der Rückenlehne verbunden, wobei über das Loslager vorzugsweise eine Rotation und/oder Linearverschiebung zu der Rückenlehne ermöglicht ist. Grundsätzlich ist es auch denkbar, dass das Abstützelement über ein Festlager an die Rückenlehne angebunden ist und aus einem Material besteht, das so elastisch ist, dass eine Anbindung quasi einem Loslager entspricht. Dadurch kann das Abstützelement besonders vorteilhaft mit der Rückenlehne verbunden werden.

Es wird weiterhin vorgeschlagen, dass das elastisch verformbare Abstützelement in einem unbelasteten Zustand in einem mittleren Bereich eine von einer Rückenlehne weggerichtete Ausbeulung aufweist. Unter einem "mittleren Bereich" soll dabei insbesondere ein Bereich verstanden werden, der im Wesentlichen mittig zwischen dem oberen Ende und dem unteren Ende des Abstützelements angeordnet ist. Unter einem "unbelasteten Zustand" soll dabei insbesondere ein Zustand verstanden werden, in dem insbesondere keine Kraft durch einen Passagier, wie insbesondere eine Auflagekraft auf das Abstützelement, ausgeübt wird. Dadurch kann das verformbare Abstützelement besonders vorteilhaft ausgebildet werden.

Des Weiteren wird vorgeschlagen, dass das elastisch verformbare Abstützelement dazu vorgesehen ist, eine Ausgleichsbewegung in einem von einem Einwirkungsbereich der Benutzungskraft unterschiedlichen Bereich auszuführen. Unter einer "Ausgleichsbewegung" soll dabei insbesondere eine Bewegung des Abstützelements verstanden werden, die zumindest einen Teil des Abstützelements als Reaktion auf eine einwirkende Benutzungskraft ausführt. Unter einem "Einwirkbereich" soll dabei insbesondere ein Bereich verstanden werden, auf den eine Kraft durch die Benutzung durch einen Passagier auf das Abstützelement einwirkt, die insbesondere durch einen Kontakt des einen Körperteils des Passagiers mit dem Abstützelement entsteht. Dadurch kann die Ausgleichsbewegung des Abstützelements besonders einfach erfolgen.

Weiterhin wird vorgeschlagen, dass das elastisch verformbare Abstützelement zumindest von einer dünnwandigen Platte ausgebildet ist. Unter einer "dünnwandigen Platte" soll dabei insbesondere eine Platte verstanden werden, die eine Dicke von weniger als 10 mm, vorzugsweise von weniger als 5 mm und in einer besonders vorteilhaften Ausgestaltung eine Dicke von etwa 3 mm aufweist. Dadurch kann das Abstützelement besonders vorteilhaft ausgebildet werden.

Außerdem wird vorgeschlagen, dass das elastisch verformbare Abstützelement von einem mehrteiligen Lamellenelement ausgebildet ist. Unter einem "mehrteiligen Lamellenelement" soll dabei insbesondere ein Element, das aus wenigstens zwei vorzugsweise mehreren, miteinander verbundenen Lamellen gebildet ist, verstanden werden, wobei die Lamellen dabei vorzugsweise beweglich miteinander verbunden sind. Dadurch kann vorteilhaft erreicht werden, dass das Abstützelement besonders vorteilhaft ausgebildet werden kann.

Es wird weiter vorgeschlagen, dass das elastisch verformbare Abstützelement zumindest zwei sich gegenüberliegende Nuten aufweist, durch die eine Elastizität des Abstützelements eingestellt ist. Dadurch kann das Abstützelement besonders vorteilhaft ausgebildet werden und in unterschiedlichen Bereichen vorteilhaft unterschiedliche Elastizitäten aufweisen.

Zudem wird vorgeschlagen, dass das Abstützmodul zumindest ein Komfortelement aufweist. Unter einem "Komfortelement" soll dabei insbesondere ein Element verstanden werden, das zumindest einen Bezug und vorteilhaft zusätzlich ein Polsterelement aufweist und dazu vorgesehen ist, einen Auflagebereich für einen Passagier zu polstern, um einen Komfort zu erhöhen. Dabei kann ein Polsterelement vorzugsweise aus einem Schaum gebildet sein. Ein Bezug ist dabei vorzugsweise aus einem Textil, besonders bevorzugt aus einem elastischen Textil gebildet. Dadurch kann das Abstützmodul besonders vorteilhaft komfortabel ausgebildet werden.

Die erfindungsgemäße Flugzeugsitzvorrichtung soll hierbei nicht auf die oben beschriebene Anwendung und Ausführungsform beschränkt sein. Insbesondere kann die erfindungsgemäße Flugzeugsitzvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen sind vier Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen:

- Fig. 1: eine schematische Darstellung einer Flugzeugsitzvorrichtung in einem ersten Ausführungsbeispiel mit einem Abstützmodul als Kopfstütze,
- Fig. 2: eine schematische Darstellung des ersten Ausführungsbeispiels mit einem angedeuteten kleinen Passagier (5. Perzentil),
- Fig. 3: eine schematische Darstellung des ersten Ausführungsbeispiels mit einem angedeuteten mittelgroßen Passagier (50. Perzentil),
- Fig. 4: eine schematische Darstellung des ersten Ausführungsbeispiels mit einem angedeuteten großen Passagier (95. Perzentil),
- Fig. 5: eine schematische Darstellung der Flugzeugsitzvorrichtung in dem ersten Ausführungsbeispiel,
- Fig. 6: eine schematische Darstellung einer Flugzeugsitzvorrichtung in einem zweiten Ausführungsbeispiel,
- Fig. 7: eine schematische Darstellung einer Flugzeugsitzvorrichtung in einem zweiten Ausführungsbeispiel mit einem Abstützmodul als Kopfstütze,
- Fig. 8: eine schematische Darstellung einer Flugzeugsitzvorrichtung in einem dritten Ausführungsbeispiel,
- Fig. 9: eine schematische Darstellung einer Flugzeugsitzvorrichtung in einem vierten Ausführungsbeispiel,
- Fig. 10: eine schematische Darstellung einer nicht beanspruchten Flugzeugsitzvorrichtung und
- Fig. 11: eine schematische Darstellung einer weiteren, nicht beanspruchten, Flugzeugsitzvorrichtung.

### Beschreibung der Ausführungsbeispiele

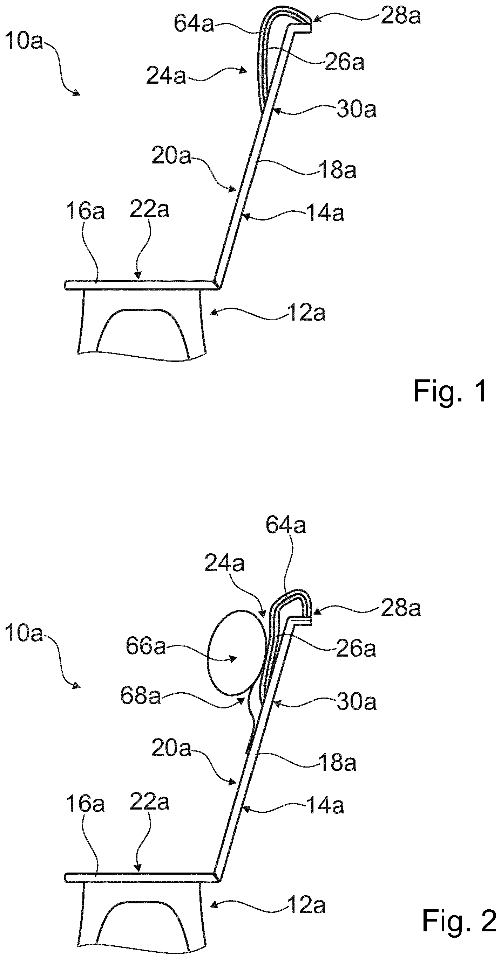

Die Figuren 1 bis 5 zeigen ein erstes Ausführungsbeispiel einer erfindungsgemäßen Flugzeugsitzvorrichtung. Die Flugzeugsitzvorrichtung ist als ein Teil eines Flugzeugsitzes 10a ausgebildet. Der Flugzeugsitz 10a ist dazu vorgesehen auf einem nicht näher dargestellten Kabinenboden eines nicht näher dargestellten Flugzeugs aufgeständert zu werden. Der Flugzeugsitz 10a ist hier in den Figuren 1 bis 4 lediglich stark abstrahiert dargestellt. Der Flugzeugsitz 10a weist eine Aufständereinheit 12a auf, über die der Flugzeugsitz 10a auf dem Kabinenboden des Flugzeugsitzes aufgeständert ist. Der Flugzeugsitz umfasst eine Rückenlehne 14a und einen Sitzboden 16a. Die Rückenlehne 14a und der Sitzboden 16a sind mit der Aufständereinheit 12a gekoppelt. Dabei kann die Rückenlehne 14a direkt oder indirekt, beispielsweise über einen Sitzteiler, mit dem Sitzboden 16a verbunden sein. Dabei ist es sowohl denkbar, dass der Sitzboden 16a und/oder die Rückenlehne 14a starr oder beweglich und in unterschiedlichen Positionen arretierbar mit der Aufständereinheit 12a gekoppelt sind. Die Rückenlehne 14a weist einen Rahmen 18a auf. Der Rahmen 18a weist dabei eine im Wesentlichen U-förmige Gestalt auf. Zur Ausbildung einer Rückenlehnenabstützfläche weist die Rückenlehne 14a eine Bespannung 20a auf, die von dem Rahmen 18a gehalten wird. Der Sitzboden 16a ist an einem unteren Ende der Rückenlehne 14a angeordnet und bildet eine Sitzfläche 22a aus. Dabei weist der Sitzboden 16a ein nicht näher dargestelltes Polsterelement und einen Bezug auf. Grundsätzlich ist es auch denkbar, dass der Sitzboden 16a von einer Bespannung gebildet ist.

Die Flugzeugsitzvorrichtung umfasst ein als Kopfstütze ausgebildetes Abstützmodul 24a. Das als Kopfstütze ausgebildete Abstützmodul 24a ist in einem oberen Bereich der Rückenlehne 14a mit der Rückenlehne 14a gekoppelt. Das Abstützmodul 24a bildet die Kopfstütze des Flugzeugsitzes 10a aus, wobei die Kopfstütze dazu vorgesehen ist, einen Abstützbereich für einen Kopf-, Nacken- und/oder Schulterbereich eines Passagiers zu bilden. Das Abstützmodul 24a ist von einem elastisch verformbaren Abstützelement 26a gebildet. Das elastisch verformbare Abstützelement 26a ist dazu vorgesehen, eine biegewellenartige Ausgleichsbewegung bei einem Einwirken einer Benutzungskraft auszuführen. Dazu ist das elastisch verformbare Abstützelement 26a als eine Biegewellenmembran ausgebildet. Das elastisch verformbare Abstützelement 26a ist von einer dünnwandigen Platte ausgebildet. Das Abstützelement 26a ist dabei aus einer dünnen Platte aus einem Verbundwerkstoff gebildet. Grundsätzlich ist es auch denkbar, dass das Abstützelement 26a aus einem anderen, dem Fachmann als sinnvoll erscheinenden Material, wie beispielsweise einem Faserverbundwerkstoff, einem Kunststoff, oder einem Metallblech, gebildet ist. Dabei ist es denkbar, dass auf dem als dünne Platte ausgebildeten Abstützelement ein Komfortmaterial zur Polsterung aufgebracht ist, das beispielsweise aus PU oder PE oder einem anderen, dem Fachmann als sinnvoll erscheinenden Schaum- oder Kunststoff ausgebildet sein kann. Das elastisch verformbare Abstützelement 26a ist dazu vorgesehen, in Abhängigkeit einer auf das Abstützelement 26a einwirkenden Kraft eine Ausgleichsbewegung auszuführen, die zumindest teilweise in einem von einem Einwirkbereich der Kraft unterschiedlichen Bereich stattfindet. Durch die Ausführung der Ausgleichsbewegung passt sich das Abstützelement 26a an eine Kontur eines Passagiers, insbesondere an die Kopf-, Nacken- und Schulterkontur des Passagiers an, wodurch eine besonders komfortable Kopfstütze erreicht werden kann.

Das elastisch verformbare Abstützelement 26a ist an seinem oberen Ende und an seinem unteren Ende mit einer Rückenlehne 12a verbunden. Dabei sind die Enden des Abstützelements 26a jeweils über eine Lagerstelle 28a, 30a mit der Rückenlehne 14a verbunden. Die Lagerstellen 28a, 30a sind jeweils als Loslager ausgebildet. Die als Loslager ausgebildeten Lagerstellen 28a, 30a fixieren die Enden des Abstützelements 26a jeweils in einer definierten Position zu der Rückenlehne 14a, lassen jedoch eine Verdrehung des Abstützelements 26a zu der Rückenlehne 14a zu. Grundsätzlich wäre es auch denkbar, dass wenigstens eine der Lagerstellen 28a, 30a zusätzlich eine Linearlagerung aufweist, über die die Enden des Abstützelements 26a relativ zu der Rückenlehne 14a verschoben werden können, oder dass mindestens ein Ende des Abstützelements 26a fest und starr mit der Rückenlehne 14a verbunden ist und sich zu dieser nicht bewegen lässt. Durch die als Loslager ausgebildeten Lagerstellen 28a, 30a kann sich das Abstützelement 26a mit seinen Enden unterschiedlich zu der Rückenlehne ausrichten und dadurch besonders vorteilhaft verschiedene Stellungen durch das Ausführen der Ausgleichsbewegung einnehmen.

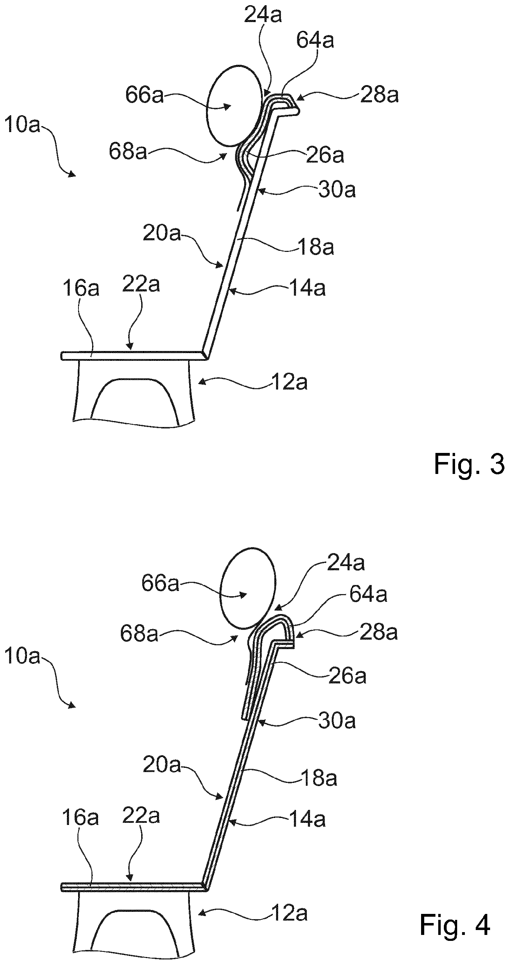

In einem unbelasteten Zustand, also in einem Zustand in dem kein Passagier seinen Kopfbereich 66a, Nacken- und/oder Schulterbereich 68a auf dem Abstützelement auflegt, weist das elastisch verformbare Abstützelement in einem mittleren Bereich eine von einer Rückenlehne weggerichtete Ausbeulung auf (siehe Figur 1). In den Figuren 2 bis 4 sind unterschiedlich große Passagiere angedeutet, die auf dem Flugzeugsitz 10a sitzen und eine entsprechende Ausgleichsbewegung des Abstützelements 26a des Abstützmoduls 24a erzeugen. Dabei sind in den Figuren 1 bis 4 eine Ausformung und eine Ausgleichsbewegung des Abstützelements 26a zur besseren Verdeutlichung stark übertrieben dargestellt. In Figur 1 ist eine vergleichsweise kleine Person (5. Perzentil), beispielweise ein Kind, gezeigt, wobei der Kopf dieser Person in einem unteren Bereich des als Kopfstütze ausgebildeten Abstützmoduls 24a angeordnet ist. Eine Kraft wirkt durch den auf der Kopfstütze abgelegten Kopf auf einen unteren Bereich des Abstützelements 26a, wodurch das Abstützelement 26a in dem unteren Bereich in Richtung der Rückenlehne 14a gedrückt wird. Ein oberer Bereich des Abstützelements 26a wird durch die biegewellenartige Ausgleichsbewegung des Abstützelements 26a in dem oberen Bereich nach oben in einen Bereich oberhalb der Rückenlehne 14a gedrückt (siehe Figur 2). In Figur 3 ist eine mittelgroße Person (50. Perzentil) angedeutet, wobei der Kopf in etwa in einem mittleren Bereich des als Kopfstütze ausgebildeten Abstützmoduls 24a angeordnet ist. Eine Kraft wirkt durch den auf der Kopfstütze abgelegten Kopf auf einen mittleren Bereich des Abstützelements 26a, wodurch das Abstützelement 26a in dem mittleren Bereich in Richtung der Rückenlehne 14a gedrückt wird. In dem unteren Bereich wird das Abstützelement 26a dabei durch die mittig einwirkende Kraft durch die Ausgleichsbewegung von der Rückenlehne 14a weggewölbt, wodurch in dem unteren Bereich eine Erhöhung entsteht, die einen Nacken- und/oder Schulterbereich 68a des Passagiers stützt (siehe Figur 3). In Figur 4 ist eine große Person (95. Perzentil) angedeutet, wobei der Kopf der Person im Wesentlichen oberhalb der Rückenlehne 14a und dem als Kopfstütze ausgebildeten Abstützmodul 24a angeordnet ist. In dieser Position übt weniger der Kopfbereich 66a, sondern der Nacken- und/oder Schulterbereich 68a der Person die Kraft auf das Abstützelement 26a aus. Der Nacken- und/oder Schulterbereich 68a der Person drückt den unteren und mittleren Bereich des Abstützelements 26a in Richtung der Rückenlehne 14a. In dem unteren Bereich wird das Abstützelement 26a dabei durch die in dem unteren und mittleren Bereich einwirkende Kraft durch die Ausgleichsbewegung nach oben gedrückt und erstreckt sich nach oben weiter von der Rückenlehne 14a weg als in dem unbelasteten Zustand. Dadurch ist eine Höhe der Rückenlehne vorteilhaft einfach anpassbar und insbesondere eine Höhe einer Körperanlagefläche kann erhöht werden. Dabei passt sich das Abstützelement 26a an einen Nacken- und/oder Schulterbereich 68a und unteren Kopfbereich 66a des Passagiers an. Dadurch bildet das Abstützelement 26a einen Abstützbereich für einen Nacken- und/oder Schulterbereich 68a eines großen Passagiers aus, der weit oberhalb des normalen Abstützbereichs liegt (siehe Figur 4). Durch die Anpassung des als Kopfstütze ausgebildeten Abstützmoduls 24a durch die elastische Verformung des Abstützelements 26a kann eine einfache und automatische Anpassung einer Höhe der Kopfstütze für verschieden große Personen erfolgen. Des Weiteren passt sich das als Kopfstütze ausgebildete Abstützmodul 24a einfach und automatisch an eine Kontur der Person an, wodurch ein Komfort weiter erhöht werden kann.

Das Abstützmodul 24a umfasst ein Komfortelement 64a. Das Komfortelement 64a ist mit dem Abstützelement 26a verbunden und bildet eine dem Passagier zugewandte Oberfläche des Abstützmoduls 24a aus. Dabei umfasst das Komfortelement 64a einen Bezug aus einem Textil und ein Polster aus einem Schaum. Der Bezug überspannt dabei das Polster des Komfortelements 64a. Dabei ist der Bezug von dem Polster trennbar, damit der Bezug vorteilhaft einfach gereinigt werden kann.

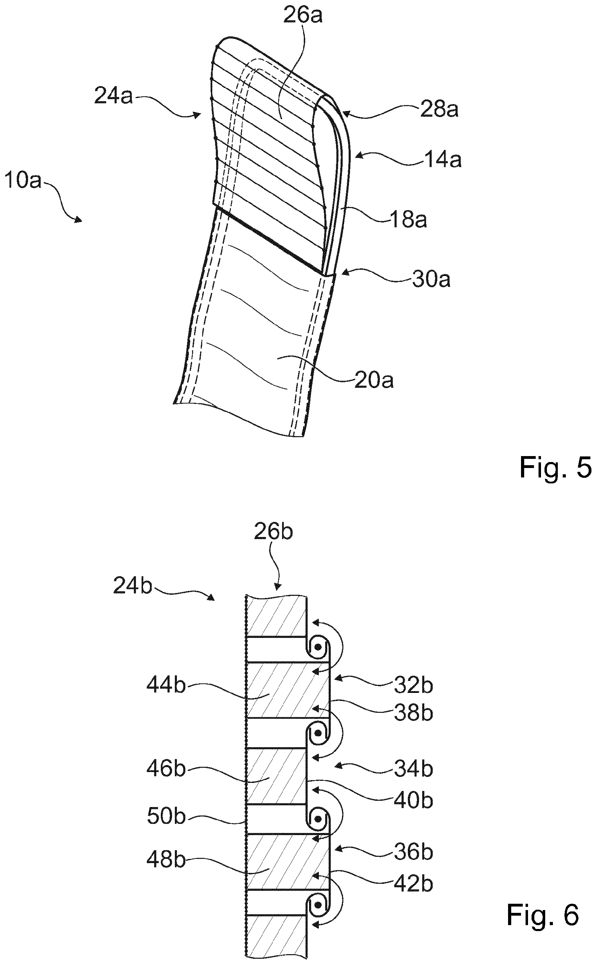

In Fig. 6 bis 9 sind drei weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Fig. 1 bis 5, verwiesen werden kann. Zur Unterscheidung der Ausführungsbeispiele ist der Buchstabe a den Bezugszeichen des Ausführungsbeispiels in Fig. 1 bis 5 nachgestellt. In den Ausführungsbeispielen der Fig. 6 bis 9 ist der Buchstabe a durch die Buchstaben b bis d ersetzt.

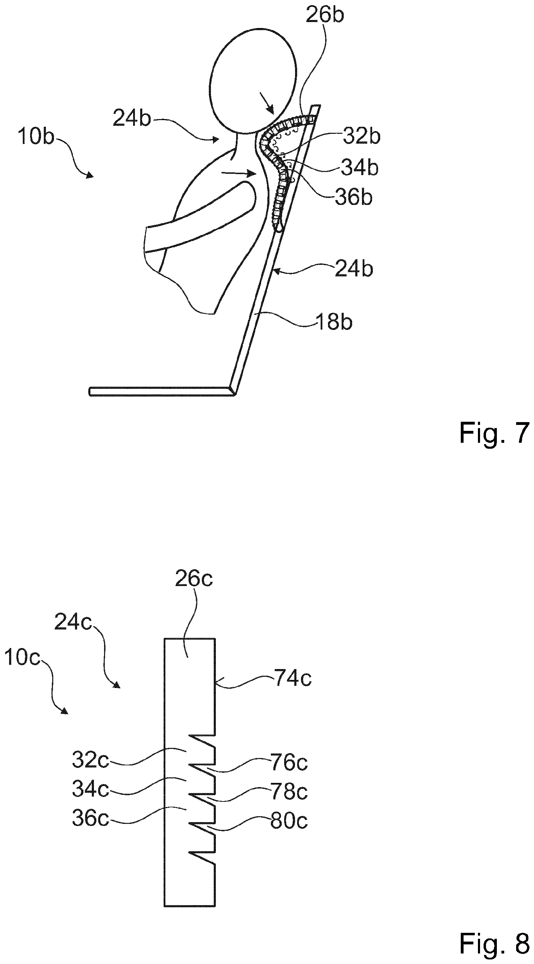

Die Figuren 6 und 7 zeigen ein zweites Ausführungsbeispiel einer erfindungsgemäßen Flugzeugsitzvorrichtung. Die Flugzeugsitzvorrichtung ist als ein Teil eines Flugzeugsitzes 10b ausgebildet. Der Flugzeugsitz 10b umfasst eine Rückenlehne 14b. Die Flugzeugsitzvorrichtung umfasst ein als Kopfstütze ausgebildetes Abstützmodul 24b. Das als Kopfstütze ausgebildete Abstützmodul 24b ist in einem oberen Bereich der Rückenlehne 14b mit der Rückenlehne 14b gekoppelt. Eine Funktion und Anordnung des Abstützmoduls 24b ist im Wesentlichen identisch zu dem Abstützmodul aus dem ersten Ausführungsbeispiel, weswegen im Folgenden lediglich die Unterschiede erläutert werden sollen.

Das Abstützmodul 24b umfasst mehrere elastisch verformbares Abstützelemente 26b. Das elastisch verformbare Abstützelement 26b ist von einem mehrteiligen Lamellenelement gebildet. Dazu weist das Abstützelement 26b mehrere Lamellenelemente 32b, 34b, 36b auf. Die Lamellenelemente 32b, 34b, 36b sind im Wesentlichen gleich ausgebildet. Zur Ausbildung des Abstützmoduls 24b sind die Lamellenelemente 32b, 34b, 36b miteinander gekoppelt. Dabei ist eine Anzahl der elastisch verformbaren und miteinander gekoppelten Lamellenelemente 32b, 34b, 36b von einer Größe des Abstützmoduls 24b abhängig und kann auch mehr als 10 oder mehr als 20 betragen. Die Lamellenelemente 32b, 34b, 36b weisen jeweils eine Grundplatte 38b, 40b, 42b auf, wobei die Grundplatten 38b, 40b, 42b an ihren einander zugewandten Enden über entsprechende Koppelstellen verschwenkbar miteinander verbunden sind. Die Lamellenelemente 32b, 34b, 36b weisen jeweils ein Komfortelement 44b, 46b, 48b auf, das mit der entsprechenden Grundplatte 38b, 40b, 42b verbunden ist. Dabei sind die Komfortelemente 44b, 46b, 48b mittels einer stoffschlüssigen Verbindung fest mit der entsprechenden Grundplatte 38b, 40b, 42b verbunden. Die Komfortelemente 44b, 46b, 48b sind dabei aus einem PU-Schaum gebildet. Auf einer den Grundplatten 38b, 40b, 42b abgewandten Seite sind die Komfortelemente 44b, 46b, 48b der Lamellenelemente 32b, 34b, 36b gemeinsam mit einem Textil 50b überzogen, das eine Oberfläche des Abstützelements 26b bildet, auf dem ein sitzender Passagier zumindest einen Teil seines Körpers abstützen kann. Das Textil 50b ist dabei flexibel ausgebildet.

Die Figur 8 zeigt ein drittes Ausführungsbeispiel einer erfindungsgemäßen Flugzeugsitzvorrichtung. Die Flugzeugsitzvorrichtung ist als ein Teil eines Flugzeugsitzes 10c ausgebildet. Der Flugzeugsitz 10c umfasst eine Rückenlehne. Die Flugzeugsitzvorrichtung umfasst ein als Kopfstütze ausgebildetes Abstützmodul 24c. Das Abstützmodul 24c ist ähnlich ausgebildet wie das Abstützmodul aus dem zweiten Ausführungsbeispiel. Das elastisch verformbare Abstützelement 26c ist von einem Lamellenelement gebildet. Dazu weist das Abstützelement 26c mehrere Lamellenelemente 32c, 34c, 36c auf. Im Unterschied zu dem zweiten Ausführungsbeispiel sind die Lamellenelemente 32c, 34c, 36c einstückig miteinander ausgebildet. Das Abstützelement 26c ist als ein einstückiges Element ausgebildet. Dazu ist das Abstützelement 26c aus einem durchgängigen Schaum gebildet. Dabei ist das Abstützelement 26c beispielsweise aus einem Pu-Schaum gebildet. Grundsätzlich ist es auch denkbar, dass das Abstützelement 26c aus einem anderen, dem Fachmann als sinnvoll erscheinenden Material gebildet ist, wie beispielsweise einem Kunststoff, oder auch einem Faserverbundwerkstoff. Das Abstützelement 26c weist an einer Rückseite 74c mehrere Mulden 76c, 78c, 80c auf, die die Lamellenelemente 32c, 34c, 36c voneinander zumindest teilweise abtrennen. Die Mulden 76c, 78c, 80c bilden einen Übergang zwischen den Lamellenelementen 32c, 34c, 36c aus und bewirken, dass die Lamellenelemente 32c, 34c, 36c zueinander bewegt werden können. Eine Ausgleichsbewegung erfolgt äquivalent insbesondere zu dem zweiten Ausführungsbeispiel.

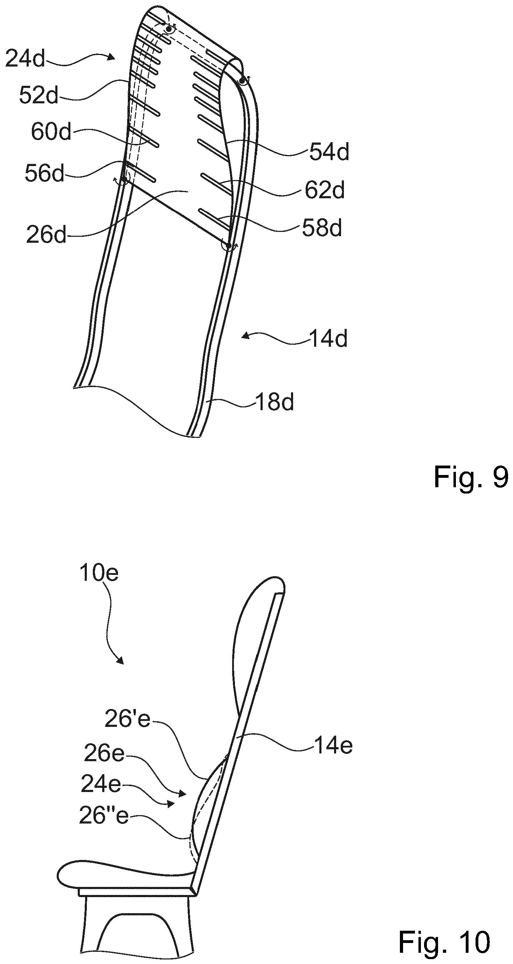

Die Figur 9 zeigt ein viertes Ausführungsbeispiel einer erfindungsgemäßen Flugzeugsitzvorrichtung. Die Flugzeugsitzvorrichtung ist als ein Teil eines Flugzeugsitzes 10d ausgebildet. Der Flugzeugsitz 10d umfasst eine Rückenlehne 14d. Die Flugzeugsitzvorrichtung umfasst ein als Kopfstütze ausgebildetes Abstützmodul 24d. Das als Kopfstütze ausgebildete Abstützmodul 24d ist in einem oberen Bereich der Rückenlehne 14d mit der Rückenlehne 14d gekoppelt. Eine Funktion und Anordnung des Abstützmoduls 24d ist im Wesentlichen identisch zu dem Abstützmodul aus dem ersten Ausführungsbeispiel, weswegen im Folgenden lediglich die Unterschiede erläutert werden sollen.

Das Abstützmodul 24d ist von einem elastisch verformbaren Abstützelement 26d gebildet. Das elastisch verformbare Abstützelement 26d ist dazu vorgesehen, eine biegewellenartige Ausgleichsbewegung bei einem Einwirken einer Benutzungskraft auszuführen. Dazu ist das elastisch verformbare Abstützelement 26d als eine Biegewellenmembran ausgebildet. Das elastisch verformbare Abstützelement 26d ist von einer dünnwandigen Platte ausgebildet. Das Abstützelement 26d weist an seinen axialen Seiten 52d, 54d von einem unteren Ende zu einem oberen Ende jeweils mehrere Nuten 56d, 58d, 60d, 62d auf. Die Nuten 56d, 58d, 60d, 62d erstrecken sich dabei jeweils von einer der axialen Seiten 52d, 54d nach innen. Dabei weisen unterscheidliche Nuten 56d, 58d, 60d, 62d unterschiedliche Längen auf. Grundsätzlich wäre es ebenso denkbar, dass mehrere oder alle Nuten 56d, 58d, 60d, 62d eine gleiche Länge aufweisen. Durch die Nuten 56d, 58d, 60d, 62d kann besonderes vorteilhaft die Elastizität des Abstützelements 26d eingestellt werden und insbesondere auch eine unterschiedliche Elastizität in unterschiedlichen Bereichen des Abstützelements 26d erreicht werden.

Die Figur 10 zeigt eine nicht beanspruchte Flugzeugsitzvorrichtung. Die Flugzeugsitzvorrichtung ist als ein Teil eines Flugzeugsitzes 10e ausgebildet. Der Flugzeugsitz 10e umfasst eine Rückenlehne 14e. Die Flugzeugsitzvorrichtung umfasst ein als Lordosenstütze ausgebildetes Abstützmodul 24e. Das als Lordosenstütze ausgebildete Abstützmodul 24e ist in einem unteren Bereich der Rückenlehne 14e mit der Rückenlehne 14e gekoppelt. Das als Lordosenstütze ausgebildete Abstützmodul 24e ist dazu vorgesehen, einen anpassungsfähigen Abstützbereich für einen Lordosenbereich eines auf dem Flugzeugsitz 10e sitzenden Passagiers auszubilden. Das als Lordosenstütze ausgebildete Abstützmodul 24e ist von einem elastisch verformbaren Abstützelement 26e gebildet. Das elastisch verformbare Abstützelement 26e ist dazu vorgesehen, eine biegewellenartige Ausgleichsbewegung bei einem Einwirken einer Benutzungskraft auszuführen. Dazu ist das elastisch verformbare Abstützelement 26e als eine Biegewellenmembran ausgebildet. Das elastisch verformbare Abstützelement 26e ist von einer dünnwandigen Platte ausgebildet. Das elastisch verformbare Abstützelement 26e ist dazu vorgesehen, in Abhängigkeit einer auf das Abstützelement 26e einwirkenden Kraft eine Ausgleichsbewegung auszuführen, die zumindest teilweise in einem von einem Einwirkbereich der Kraft unterschiedlichen Bereich stattfindet. Durch die Ausführung der Ausgleichsbewegung passt sich das Abstützelement 26e an eine Kontur eines Passagiers, insbesondere an einen untere Rückenbereich des Passagiers an, wodurch eine besonders komfortable Rückenlehne 14e erreicht werden kann. Dabei zeigt die Figur 9 ein Abstützelement 26d' in einem unbelasteten Zustand und ein Abstützelement 26d" in einem belasteten Zustand. Durch das als Lordosenstütze ausgebildete Abstützmodul 24e kann insbesondere eine bessere Unterstützung unterschiedlicher Körperhaltungen durch den Flugzeugsitz 1d bereitgestellt werden. Insbesondere eine teilweise sitzende, teilweise liegende Position, eine sogenannte "Slouch-Position", die im Wesentlichen einer tief in den Flugzeugsitz 10e eingesunkenen Entspannungsposition des Passagiers entspricht, kann durch das als Lordosenstütze ausgebildete Abstützmodul 24e besonders vorteilhaft und komfortabel ausgebildet werden.

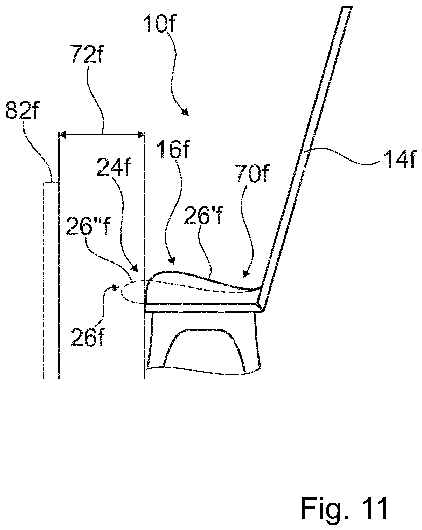

Die Figur 11 zeigt eine weitere, nicht beanspruchte, Flugzeugsitzvorrichtung. Die Flugzeugsitzvorrichtung ist als ein Teil eines Flugzeugsitzes 10f ausgebildet. Der Flugzeugsitz 10f umfasst eine Rückenlehne 14f. Die Flugzeugsitzvorrichtung umfasst ein als Sitzboden 16f ausgebildetes Abstützmodul 24f. Das als Sitzboden 16f ausgebildete Abstützmodul 24f ist in einem unteren Bereich der Rückenlehne 14f angeordnet. Das Abstützmodul 24f bildet einen Teil des Sitzbodens 16f des Flugzeugsitzes 10f aus. Dabei bildet das Abstützmodul 24f insbesondere einen vorderen Teil des Sitzbodens 16f aus. In einem Mittleren und hinteren Bereich ist der Sitzboden 16f von einem Bespannungselement 70f gebildet. Das als Sitzboden 16f ausgebildete Abstützmodul 24f ist dazu vorgesehen, einen anpassungsfähigen Sitzbereich für einen auf dem Flugzeugsitz 10f sitzenden Passagier auszubilden. Das als Sitzboden 16f ausgebildete Abstützmodul 24f ist von einem elastisch verformbaren Abstützelement 26f gebildet. Das Abstützelement 26f bildet ein vorderes Ende des Sitzbodens 16f aus. Dabei ist das Abstützelement 26f unmittelbar an die Bespannung 70 angebunden. Das elastisch verformbare Abstützelement 26f ist dazu vorgesehen, eine biegewellenartige Ausgleichsbewegung bei einem Einwirken einer Benutzungskraft auszuführen. Dazu ist das elastisch verformbare Abstützelement 26f als eine Biegewellenmembran ausgebildet. Das elastisch verformbare Abstützelement 26f ist von einer dünnwandigen Platte ausgebildet. Das elastisch verformbare Abstützelement 26f ist dazu vorgesehen, in Abhängigkeit einer auf das Abstützelement 26f einwirkenden Kraft eine Ausgleichsbewegung auszuführen, die zumindest teilweise in einem von einem Einwirkbereich der Kraft unterschiedlichen Bereich erfolgt. Dabei zeigt die Figur 10 ein Abstützelement 26f' in einem unbelasteten Zustand und ein Abstützelement 26f" in einem belasteten Zustand. Das Abstützelement 26f ist dabei dazu vorgesehen, sich in einem belasteten Zustand nach vorne zu bewegen. In einem unbelasteten Zustand ist das Abstützelement 26f mit seinem vorderen Ende weiter in Richtung der Rückenlehne angeordnet und vorzugsweise lediglich unmittelbar oberhalb einer Aufständereinheit 12f angeordnet. In dem belasteten Zustand erstreckt sich das Abstützelement 26f nach vorne über die Aufständereinheit 12f. Dadurch ist ein Abstand 72f zwischen dem vorderen Ende des Sitzbodens 16f und einem vor dem Flugzeugsitz 10f angeordneten Flugzeugelement 82f in dem unbelasteten Zustand des Abstützelements 26f vorteilhaft groß. Dadurch kann ein besonders großer Einstieg für einen Passagier erreicht werden. Insbesondere auch in Fluchtwegen kann ein besonders vorteilhaft großer Korridor für Passagiere erreicht werden.

Grundsätzlich ist es auch denkbar, dass ein Flugzeugsitz mehrere Abstützmodule aufweist, die als Kopfstütze, als Lordosenstütze oder als Sitzboden ausgebildet sind.

### Bezugszeichen

- 10: Flugzeugsitz
- 12: Aufständereinheit
- 14: Rückenlehne
- 16: Sitzboden
- 18: Rahmen
- 20: Bespannung
- 22: Sitzfläche
- 24: Abstützmodul
- 26: Abstützelement
- 28: Lagerstelle
- 30: Lagerstelle
- 32: Lamellenelement
- 34: Lamellenelement
- 36: Lamellenelement
- 38: Grundplatte
- 40: Grundplatte
- 42: Grundplatte
- 44: Komfortelement
- 46: Komfortelement
- 48: Komfortelement
- 50: Textil
- 52: axiale Seite
- 54: axiale Seite
- 56: Nut
- 58: Nut
- 60: Nut
- 62: Nut
- 64: Komfortelement
- 66: Kopfbereich
- 68: Nacken und/oder Schulterbereich
- 70: Bespannung
- 72: Abstand
- 74: Rückseite
- 76: Mulde
- 78: Mulde
- 80: Mulde
- 82: Flugzeugelement

## Patentansprüche

1. Flugzeugsitzvorrichtung mit einem Abstützmodul (24a; 24b; 24c; 24d; 24e), das als eine Kopfstütze ausgebildet ist und das zumindest ein elastisch verformbares Abstützelement (26a; 26b; 26c; 26d; 26e) umfasst, **dadurch gekennzeichnet, dass** das elastisch verformbare Abstützelement (26a; 26b; 26c; 26d; 26e) dazu vorgesehen ist, eine biegewellenartige Ausgleichsbewegung durch elastische Verformung bei einem Einwirken einer Benutzungskraft auszuführen, wobei das elastisch verformbare Abstützelement (26a; 26b; 26c; 26d; 26e) dazu vorgesehen ist, in Abhängigkeit einer auf das Abstützelement (26a; 26b; 26c; 26d; 26e) einwirkenden Kraft eine Ausgleichsbewegung auszuführen, die zumindest teilweise in einem von einem Einwirkbereich der Kraft unterschiedlichen Bereich stattfindet, wobei ein Kopf einer mittel-großen Person (50. Perzentil) in etwa in einem mittleren Bereich des als Kopfstütze ausgebildeten Abstützmoduls (24a; 24b; 24c; 24d; 24e) angeordnet ist, wobei die Kraft durch den auf der Kopfstütze abgelegten Kopf auf den mittleren Bereich des Abstützelements (26a; 26b; 26c; 26d; 26e) wirkt, wodurch das Abstützelement (26a; 26b; 26c; 26d; 26e) in dem mittleren Bereich in Richtung einer Rückenlehne (14a; 14b; 14d; 14e) gedrückt wird, wobei das Abstützelement (26a; 26b; 26c; 26d; 26e) in einem unteren Bereich durch die mittig einwirkende Kraft durch die Ausgleichsbewegung von der Rückenlehne (14a; 14b; 14d; 14e) weggewölbt wird, wodurch in dem unteren Bereich eine Erhöhung entsteht, die einen Nacken- und/oder Schulterbereich (68a) eines Passagiers stützt.

2. Flugzeugsitzvorrichtung nach Anspruch 1, **dadurch gekennzeichnet, dass** das elastisch verformbare Abstützelement (26a; 26b; 26c; 26d; 26e; 26f) als eine Biegewellenmembran ausgebildet ist.

3. Flugzeugsitzvorrichtung nach Anspruch 1 oder 2, **dadurch gekennzeichnet, dass** das elastisch verformbare Abstützelement (26a; 26b; 26c; 26d; 26e) an seinem oberen Ende und an seinem unteren Ende mit einer Rückenlehne (14a; 14b; 14c; 14d; 14e) verbunden ist.

4. Flugzeugsitzvorrichtung nach einem der vorhergehenden Ansprüche, **dadurch gekennzeichnet, dass** das elastisch verformbare Abstützelement (26a; 26b; 26c; 26d) in einem unbelasteten Zustand in einem mittleren Bereich eine von einer Rückenlehne (14a; 14b; 14c; 14d) weggerichtete Ausbeulung aufweist.

5. Flugzeugsitzvorrichtung nach einem der vorhergehenden Ansprüche, **dadurch gekennzeichnet, dass** das elastisch verformbare Abstützelement (26a; 26b; 26c; 26d; 26e; 26f) dazu vorgesehen ist, eine Ausgleichsbewegung in einem von einem Einwirkungsbereich der Benutzungskraft unterschiedlichen Bereich auszuführen.

6. Flugzeugsitzvorrichtung nach einem der vorhergehenden Ansprüche, **dadurch gekennzeichnet, dass** das elastisch verformbare Abstützelement (26a; 26c; 24d; 26e; 26f) von einer dünnwandigen Platte ausgebildet ist.

7. Flugzeugsitzvorrichtung nach einem der vorhergehenden Ansprüche, **dadurch gekennzeichnet, dass** das elastisch verformbare Abstützelement (26b; 26c) von einem mehrteiligen Lamellenelement ausgebildet ist.

8. Flugzeugsitzvorrichtung nach einem der vorhergehenden Ansprüche, **dadurch gekennzeichnet, dass** das elastisch verformbare Abstützelement (26d) zumindest zwei sich gegenüberliegende Nuten (56d, 58d, 60d, 62d) aufweist, durch die eine Elastizität des Abstützelements (26d) eingestellt ist.

9. Flugzeugsitzvorrichtung nach einem der vorhergehenden Ansprüche, **dadurch gekennzeichnet, dass** das Abstützmodul (24a) zumindest ein Komfortelement (64a) aufweist.

10. Flugzeugsitz mit einer Flugzeugsitzvorrichtung nach einem der vorhergehenden Ansprüche.

## Claims

1. Aircraft seat device with a support module (24a; 24b; 24c; 24d; 24e) that is embodied as a headrest and comprises at least one elastically deformable support element (26a; 26b; 26c; 26d; 26e),
**characterised in that** the elastically deformable support element (26a; 26b; 26c; 26d; 26e) is configured to execute, under the influence of a utilisation force, a bending-wave-like compensation movement via elastic deformation,
the elastically deformable support element (26a; 26b; 26c; 26d; 26e) being configured, depending on a force acting onto the support element (26a; 26b; 26c; 26d; 26e), to execute a compensation movement that takes place at least partly in a region differing from an impact zone of the force,
a head of a middle-sized person (50^{th} percentile) being arranged approximately in a middle region of the support module (24a; 24b; 24c; 24d; 24e) that is embodied as a headrest,
the force acting onto the middle region of the support element (26a; 26b; 26c; 26d; 26e) via the head deposited on the headrest, which results in the support element (26a; 26b; 26c; 26d; 26e) being pressed, in the middle region, towards a backrest (14a; 14b; 14c; 14d; 14e),
the support element (26a; 26b; 26c; 26d; 26e) being bulged away from the backrest (14a; 14b; 14c; 14d; 14e) in a lower region by the compensation movement via the centrally acting force, which results in an elevation in the lower region that supports a passenger's nape and/or shoulder region (68a).

2. Aircraft seat device according to claim 1,
**characterised in that** the elastically deformable support element (26a; 26b; 26c; 26d; 26e; 26f) is implemented as a bending-wave membrane.

3. Aircraft seat device according to claim 1 or 2,
**characterised in that** the elastically deformable support element (26a; 26b; 26c; 26d; 26e) is connected to a backrest (14a; 14b; 14c; 14d; 14e) at its upper end and at its lower end.

4. Aircraft seat device according to one of the preceding claims,
**characterised in that** in a non-loaded state the elastically deformable support element (26a; 26b; 26c; 26d) has a bulge in a middle region that is oriented away from a backrest (14a; 14b; 14c; 14d).

5. Aircraft seat device according to one of the preceding claims,
**characterised in that** the elastically deformable support element (26a; 26b; 26c; 26d; 26e; 26f) is configured to execute a compensation movement in a region that differs from an impact zone of the utilisation force.

6. Aircraft seat device according to one of the preceding claims,
**characterised in that** the elastically deformable support element (26a; 26c; 26d; 26e; 26f) is implemented by a thin-walled panel.

7. Aircraft seat device according to one of the preceding claims,
**characterised in that** the elastically deformable support element (26b; 26c) is implemented by a multi-part lamellae element.

8. Aircraft seat device according to one of the preceding claims,
**characterised in that** the elastically deformable support element (26d) comprises at least two opposite-situated grooves (56d, 58d, 60d, 62d), via which an elasticity of the support element (26d) is adjusted.

9. Aircraft seat device according to one of the preceding claims,
**characterised in that** the support module (24a) comprises at least one comfort element (64a).

10. Aircraft seat with an aircraft seat device according to one of the preceding claims.

## Revendications

1. Dispositif de siège d'avion avec un module de soutien (24a ; 24b ; 24c ; 24d ; 24e), qui est réalisé comme un appuie-tête et comprend au moins un élément de soutien (26a ; 26b ; 26c ; 26d ; 26e) qui est élastiquement déformable,
**caractérisé en ce que** l'élément de soutien élastiquement déformable (26a ; 26b ; 26c ; 26d ; 26e) est configuré à exécuter un mouvement en forme d'onde transversale par une déformation élastique conjointement à l'impact d'une force d'utilisation,
l'élément de soutien élastiquement déformable (26a ; 26b ; 26c ; 26d ; 26e) étant configuré, en fonction d'une force agissant sur l'élément de soutien (26a ; 26b ; 26c ; 26d ; 26e), à exécuter un mouvement de compensation ayant lieu au moins partiellement dans une zone différant d'une zone d'impact de la force,
une tête d'une personne de taille moyenne (50^{eme} centile) étant disposée approximativement dans une zone centrale du module de soutien (24a ; 24b ; 24c ; 24d ; 24e) qui est réalisé comme appuie-tête,
la force agissant sur la zone centrale de l'élément de soutien (26a ; 26b ; 26c ; 26d ; 26e) via la tête déposée sur l'appuie-tête, moyennant quoi l'élément de soutien (26a ; 26b ; 26c ; 26d ; 26e) est pressé, dans la zone centrale, vers un dossier (14a ; 14b ; 14c ; 14d ; 14e), l'élément de soutien (26a ; 26b ; 26c ; 26d ; 26e) étant vouté à l'écart du dossier (14a ; 14b ; 14c ; 14d ; 14e) dans une zone inférieure par le mouvement de compensation via la force qui agit centralement sur l'élément de soutien (26a ; 26b ; 26c ; 26d ; 26^{e}), ce qui produit dans une région inférieure une élévation qui soutient une zone nuque-et/ou-épaules (68a) d'un passager.

2. Dispositif de siège d'avion selon la revendication 1,
**caractérisé en ce que** l'élément de soutien élastiquement déformable (26a ; 26b ; 26c ; 26d ; 26e ; 26f) est réalisé comme une membrane d'onde transversale.

3. Dispositif de siège d'avion selon la revendication 1 ou 2,
**caractérisé en ce que** l'élément de soutien élastiquement déformable (26a ; 26b ; 26c ; 26d ; 26e) est raccordé à un dossier (14a ; 14b ; 14c ; 14d ; 14e) avec son extrémité supérieure et avec son extrémité inférieure.

4. Dispositif de siège d'avion selon l'une des revendications précédentes,
**caractérisé en ce que** l'élément de soutien élastiquement déformable (26a ; 26b ; 26c ; 26d) présente en état non-chargé, dans une zone centrale, un renflement orienté à l'écart du dossier (14a ; 14b ; 14c ; 14d).

5. Dispositif de siège d'avion selon l'une des revendications précédentes,
**caractérisé en ce que** l'élément de soutien élastiquement déformable (26a ; 26b ; 26c ; 26d ; 26e ; 26f) est configuré à exécuter un mouvement de compensation dans une zone différant d'une zone d'impact de la force d'utilisation.

6. Dispositif de siège d'avion selon l'une des revendications précédentes,
**caractérisé en ce que** l'élément de soutien élastiquement déformable (26a ; 26c ; 26d ; 26e ; 26f) est implémenté par une plaque à paroi mince.

7. Dispositif de siège d'avion selon l'une des revendications précédentes,
**caractérisé en ce que** l'élément de soutien élastiquement déformable (26b ; 26c) est implémenté par un élément lamellé en plusieurs parties.

8. Dispositif de siège d'avion selon l'une des revendications précédentes,
**caractérisé en ce que** l'élément de soutien élastiquement déformable (26d) comprend au moins deux rainures (56d, 58d, 60d, 62d) l'une opposée à l'autre, par le biais desquelles une élasticité de l'élément de soutien (26d) est réglée.

9. Dispositif de siège d'avion selon l'une des revendications précédentes,
**caractérisé en ce que** le module de soutien (24a) comprend au moins un élément de confort (64a).

10. Siège d'avion avec un dispositif de siège d'avion selon l'une des revendications précédentes.
